# EUROPÄISCHE PATENTSCHRIFT

(11) **EP 0 794 978 B1**
(45) Veröffentlichungstag und Bekanntmachung des Hinweises auf die Patenterteilung: **10.06.1998**
(21) Anmeldenummer: 95940227.2
(22) Anmeldetag: 21.11.1995
(51) Int. Cl.: C08L 59/00

(54) **SCHLAGZÄHE THERMOPLASTISCHE FORMMASSEN**
IMPACT-RESISTANT THERMOPLASTIC SHAPING COMPOUNDS
MATIERES DE MOULAGE THERMOPLASTIQUES A RESISTANCE ELEVEE AUX CHOCS

(30) Priorität: 01.12.1994 DE 4442722
(43) Veröffentlichungstag der Anmeldung: 17.09.1997
(73) Patentinhaber: BASF AKTIENGESELLSCHAFT, 67056 Ludwigshafen (DE)
(72) Erfinder: KIELHORN-BAYER, Sabine, D-67133 Maxdorf (DE); EICHENAUER, Ulrich, D-67459 Böhl-Iggelheim (DE); LEHRICH, Friedhelm, Grosse Ile, MI 48138 (US)
(86) Internationale Anmeldenummer: EP9504590
(87) Internationale Veröffentlichungsnummer: WO9617018

(56) Entgegenhaltungen:
- EP-A- 0 548 815
- GB-A- 1 591 262
- US-A- 4 640 949

## Beschreibung

Die Erfindung betrifft schlagzähe thermoplastische Formmassen, enthaltend
A) 10 bis 99,5 Gew.-% eines Polyoxymethylenhomo- oder copolymerisates,
B) 0,5 bis 80 Gew.-% eines thermoplastischen Polyurethans,
C) 0 bis 50 Gew.-% eines faser- oder teilchenförmigen Füllstoffes oder deren Mischungen
D) 0 bis 30 Gew.-% üblicher Zusatzstoffe und Verarbeitungsmittel,
wobei die Gewichtsprozente der Komponenten A) bis D) 100 % ergeben.

Weiterhin betrifft die Erfindung die Verwendung derartiger Formmassen zur Herstellung von Formkörpern jeglicher Art und die daraus erhältlichen Formkörper.

Polyoxymethylene, welche thermoplastische Polyurethane als Schlagzähmodifier enthalten, sind u.a. aus der EP-A 116 456 bekannt.

Die Abmischung von thermoplastischen Polyurethanen mit anderen Polymeren ist bekannt aus:
- JP-A 56/1 368 38: Mischungen aus Polyester und Polyurethan
- JP-A 58/2 095 27: verstärkte thermoplastische Formmassen aus zwei verschiedenen Thermoplasten und Füllstoff (z.B. Polyurethan + Polystyrol oder ABS + Glaskugeln)
- JP-A 57/0 859 94: Thermoplastische Formmassen (z.B. Polyamid) mit Polyurethan, Ruß und Metallsulfidpulver
- BE-A 882 117: Thermoplastische Formmassen aus TPU und modifiziertem PE und weiteren Thermoplasten wie z.B. Polyester
- JP-A 63/1 267 09: Formmassen, bestehend aus nicht kristallinen Thermoplasten (z.B. Polyamid, PET, Polyolefin oder Polyurethan) und kristallinen Thermoplasten (z.B. Polystyrol, PVC oder ABS).

In einigen Anwendungen wie z.B. Sanitärtechnik werden neben einer guten Schlagzähigkeit auch hohe Anforderungen an Hydrolyse-, Heißwasser- und Feuchtwärmestabilität gestellt. Polymere wie Polyoxymethylene sind bekanntermaßen stabil, resistent gegen übliche organische Lösungsmittel oder heißes Wasser, TPU jedoch nicht. Insbesondere bei Dauergebrauch vergilben und verspröden derartige Formkörper aus POM/TPU Blendzusammensetzungen.

In der EP-A 117 748 wurden zur besseren Stabilisierung von POM/TPU Blends Polycarbodiimide bestimmten Molgewichtes mit sterisch gehinderten Gruppen in derartige Blends eingearbeitet. Nachteilig bei derartig stabilisierten Blends ist die bei der Verarbeitung auftretende Isocyanatabspaltung. Die Vergilbungsneigung wird durch den Zusatz dieser Polycarbodiimide nicht wesentlich verändert, da derartige Formkörper immer noch eine gelbliche Färbung aufweisen.

In der DE-OS 37 03 232 wurden POM/TPU Formmassen beschrieben, die mit Erdalkalisalzen von aliphatischen, vorzugsweise hydroxylgruppenhaltigen aliphatischen ein- bis dreibasigen Carbonsäuren stabilisiert sind. Diese Zusätze eignen sich jedoch nicht, um die Hydrolysestabilität der Formmassen zu steigern. Außerdem ist die Verfärbungsneigung hoch.

Aus der GB-B 993 600 sind POM/TPU Mischungen bekannt, welche Polyamide und bestimmte Monocarbodiimide als Stabilisatoren enthalten. Die Steifigkeit derartiger Formkörper ist jedoch unbefriedigend. Bei der Verarbeitung zeigen diese Monocarbodiimide darüber hinaus den Nachteil, daß sie ausschwitzen, d.h. es kommt zu Belägen in der Spritzgußform.

Aus der US 4 640 949 sind POM/TPU Mischungen bekannt, welche aromatische Polycarbodiimide als Stabilisatoren enthalten.

In der jüngeren EP-Anm. Nr. 94108216.6 (Stand der Technik nach Art. 54(3)) wurden neue Carbodiimide für TPU vorgeschlagen.

Aufgabe der vorliegenden Erfindung war es, schlagzähe thermoplastische Formmassen zur Verfügung zu stellen, die folgende Vorteile zeigen:
- Geringe Vergilbung nach Verarbeitung und bei Wärmelagerung
- Erhalt der Zähigkeit, Reißdehnung und Zugfestigkeit der entsprechenden Probekörper bei Wärmelagerung
- Erhalt der Zähigkeit, Reißdehnung und Zugfestigkeit der entsprechenden Probekörper bei Heißwasserlagerung
- möglichst geringe Gewichtsverluste der Probekörper bei Heißwasser- und Wärme- bzw. Feuchtwärmeeinfluß
- geringe Isocyanatentwicklung aus den Carbodiimiden bei Verarbeitung (toxikologisch unbedenklich)
- Belagbildung in der Spritzgußform sollte weitestgehend vermieden werden (für Polycarbodiimide).

Demgemäß wurden die eingangs definierten Formmassen gefunden, welche dadurch gekennzeichnet sind, daß das thermoplastische Polyurethan B) 0,05 bis 10 Gew.-%, bezogen auf B), eines Carbodiimids der Formel I enthält: 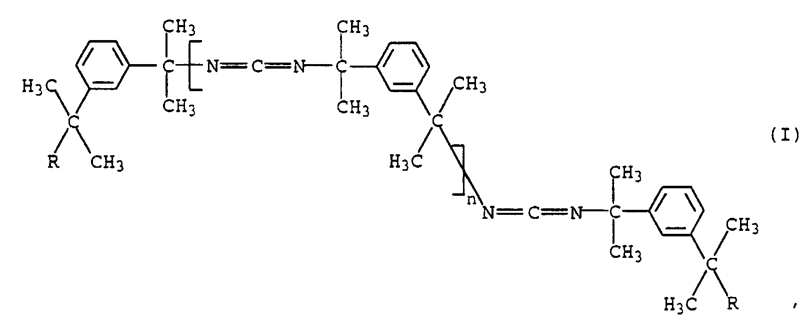 in der
- R: gleich oder verschieden und ausgewählt ist aus der Gruppe der -NCO-, -NHCONHR¹-, -NHCONR¹R²- und -NHCOOR³-Reste, wobei
- R¹ und R²: gleich oder verschieden sind und einen Alkyl-, Cycloalkyl- oder Aralkylrest bedeuten und
- R³: gleich R¹ oder ein Alkoxypolyoxyalkylenrest ist und
- n: eine ganze Zahl von 0 bis 10 bedeutet.

Bevorzugte Ausführungsformen sind den Unteransprüchen zu entnehmen.

Als Komponente A) enthalten die erfindungsgemäßen Formmassen 10 bis 99,5, vorzugsweise 15 bis 99 und insbesondere 20 bis 95 Gew.-% eines Polyoxymethylenhomo- oder copolymerisates.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A) bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 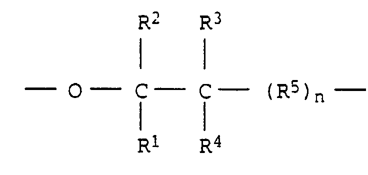 wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R5 eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 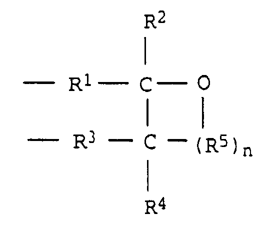 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 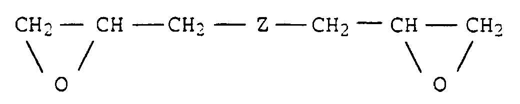 wobei Z eine chemische Bindung, -O-, -ORO- (R= C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen 0,5 bis 80, vorzugsweise 1 bis 60 und insbesondere 5 bis 50 Gew.-% eines thermoplastischen Polyurethans (TPU), welches 0,05 bis 10, bevorzugt 0,1 bis 5, insbesondere 0,2 bis 2 und ganz besonders bevorzugt 0,3 bis 1,5 Gew.-%, bezogen auf B), eines Carbodiimids der Formel I enthält: 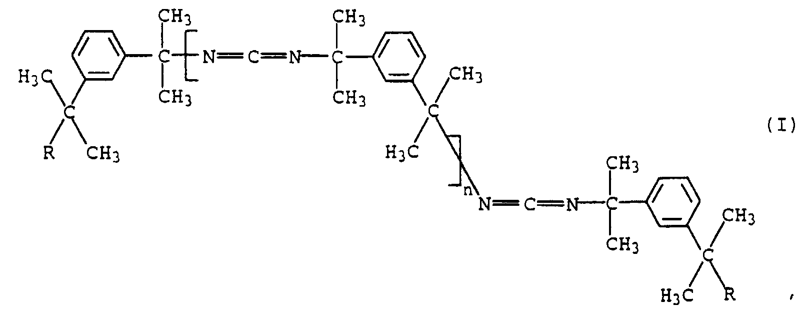 in der
- R: gleich oder verschieden und ausgewählt ist aus der Gruppe der -NCO-, -NHCONHR¹-, -NHCONR¹R²- und -NHCOOR³-Reste, wobei
- R¹ und R²: gleich oder verschieden sind und einen Alkyl-, Cyclo- alkyl- oder Aralkylrest bedeuten und
- R³: gleich R¹ oder ein Alkoxypolyoxyalkylenrest ist und
- n: eine ganze Zahl von 0 bis 10 ist.

Geeignete TPU können beispielsweise hergestellt werden durch Umsetzung von
a) organischen, vorzugsweise aromatischen Diisocyanaten,
b) Polyhydroxylverbindungen mit Molekulargewichten von 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen.

Zu den hierfür verwendbaren Ausgangsstoffen (a) bis (c), Katalysatoren (d), Hilfsmitteln und Zusatzstoffen (e) möchten wir folgendes ausführen:
a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6--Toluylen-diisocyanat, 4,4'-, 2,4'- und 2,2'-Diphenylmethan-diisocyanat. Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanatodiphenylethan-(1,2) und 1,5-Naphthylendiisocyanat. Vorzugsweise verwendet werden Hexamethylen-diisocyanat, Isophorondiisocyanat, 1,5-Naphthylen-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).
   Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist; z.B. insbesondere Polyoxytetramethylenglykole.
   Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids, an das Startermolekül anpolymerisiert.
   Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zu Anwendung kommen.
   Geeignete Polyesterole können beispielsweise aus Dicarbonsäuren mit 2 bis 12 Kohlenstoffatomen, vorzugsweise 4 bis 8 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandio1-1,3, Propandiol-1,3 und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Dialkylenglykol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiolneopentylglykol-polyadipate, Polycaprolactone und insbesondere 1,6-Hexandiol-1,4-butandiol-polyadipate.
   Die Polyesterole besitzen Molekulargewichte von 500 bis 6000, vorzugsweise von 800 bis 3500.
c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4'-Diamino-diphenylmethane.
   Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der TPU mit zunehmendem Gehalt an Diolen ansteigt.
   Zur Herstellung der TPU werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1:0,85 bis 1,20, vorzugsweise 1:0,95 bis 1:1,05 und insbesondere 1:0,98 bis 1,02 beträgt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetyl-acetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.
   Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Weichmacher.

Nähere Angaben über die obengenannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Die erfindungsgemäßen Carbodiimide und/oder oligomeren Polycarbodiimide besitzen an eine Methylengruppe gebundene, sterisch gehinderte Isocyanat-, Harnstoff- und/oder Urethangruppen, zeigen eine mit den technisch genutzten aromatischen Carbodiimiden und aromatischen Polycarbodiimiden zumindest vergleichbare hohe Hydrolyseschutzwirkung bei erhöhter Lichtbeständigkeit und können unter Beachtung der Arbeitsschutzvorschriften problemlos ohne zusätzliche Homogenisierungsschritte wirtschaftlich dosiert und in die Estergruppen enthaltenden TPU eingearbeitet werden. Vorteilhaft ist ferner die große Anzahl an wirksamen Carbodiimidgruppen, bezogen auf das Molekulargewicht der (Poly)carbodiimide, ihr geringer Dampfdruck und das vernachlässigbare Migrations- und Ausblühverhalten. Die (Poly)carbodiimide sind mit den Estergruppen enthaltenden TPU, insbesondere mit Polyesterurethanen, gut verträglich und aufgrund ihres niedrigen Schmelzpunktes auch problemlos mit diesen Materialien in der Schmelze homogen mischbar.

Aus den erfindungsgemäßen Carbodiimiden und oligomeren Polycarbodiimiden entstehen bei der Reaktion mit Carbonsäuren und/oder carboxylgruppenhaltigen Verbindungen araliphatische Isocyanate mit einer im Vergleich zu aromatischen Isocyanaten geringen Reaktivität. Die gebildeten araliphatischen Isocyanate beeinflussen daher die Kennzahl der Polyadditionsreaktion bei der Urethanbildung praktisch nicht. Folglich sind die Molekulargewichte der gebildeten Polyurethane und damit verbunden ihre mechanischen Eigenschaften konstant und sehr gut reproduzierbar. Vorteilhaft ist ferner, daß die aus den Isocyanaten entstehenden Abbauprodukte keine aromatischen Amingruppen gebunden haben und daher toxikologisch als relativ unproblematisch anzusehen sind.

Neben den monomeren Carbodiimiden finden als oligomere Polycarbodiimide vorteilhafterweise solche mit einem mittleren Kondensationsgrad (Zahlenmittelwert) von 2 bis 10, vorzugsweise von 2 bis 5 oder Mischungen davon oder Mischungen aus Mono- und oligomeren Polycarbodiimiden Verwendung, da diese sich in der Regel besonders gut in die zu stabilisierenden Estergruppen enthaltenden TPU einbringen lassen. Höherkondensierte Polycarbodiimide sind in der Regel feste, hochschmelzende Verbindungen, die mit der Kunststoffmatrix unzureichend verträglich und daher schwieriger mit den TPU homogen mischbar sind.

Die erfindungsgemäßen Carbodiimide und/oder oligomeren Polycarbodiimide der Formel (II) 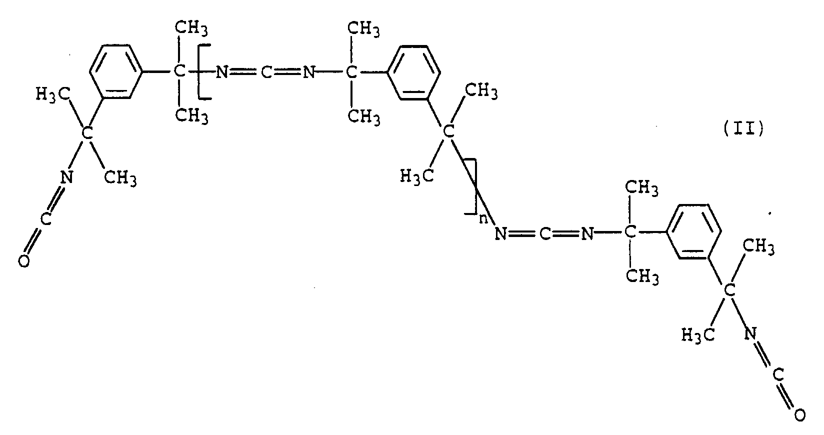 besitzen noch reaktive Isocyanatgruppen und können daher mit Verbindungen mit NCO-reaktiven Wasserstoffatomen reagieren und auf diese Weise in den Polyadditions- oder Polykondensationsprodukten chemisch gebunden werden. Zur Verbesserung der Lagerbeständigkeit der (Poly)carbodiimide können die endständigen Isocyanatgruppen beispielsweise mit C-H- oder N-H-reaktiven Verbindungen, wie z.B. Malonester, Acetylaceton, Acetessigester, Phthalimid, Caprolactam oder Benzolsulfonamid ganz oder teilweise verkappt oder durch Umsetzung mit aliphatischen, cycloaliphatischen oder araliphatischen Aminen, Alkoholen oder Polyoxyalkylenalkoholen teilweise oder vollständig abgesättigt und dadurch ihre physikalischen Eigenschaften, z.B. ihre Löslichkeit oder Verträglichkeit, gezielt modifiziert werden.

Zur Absättigung der Isocyanatgruppen der (Poly)carbodiimide können, wie bereits ausgeführt wurde, Amine, Alkohole und Polyoxyalkylenalkohole, verwendet werden. Geeignete Amine, z.B. primäre oder vorzugsweise sekundäre Amine, besitzen vorteilhafterweise 1 bis 12 C-Atome, vorzugsweise 2 bis 8 C-Atome. Beispielhaft genannt seien Methyl-, Ethyl-, Propyl-, Butyl-, Pentyl-, Hexyl-, 2-Ethylhexyl-, Octyl-, Decyl-, Diethyl-, Dipropyl-, Dibutyl-, Methylbutyl-, Ethylbutyl- und Ethylhexylamin sowie Cyclohexyl- und Benzylamin. Zur Absättigung der Isocyanatgruppen finden jedoch vorzugsweise Alkohole, z.B. primäre oder sekundäre Alkohole mit 1 bis 18 C-Atomen, vorzugsweise 2 bis 8 C Atomen und insbesondere Alkoxypolyoxyalkylenalkohole mit 1 bis 10 C-Atomen, vorzugsweise 1 bis 4 C-Atomen, in der Alkoxygruppe und einem Molekulargewicht von 76 bis 2000, vorzugsweise 400 bis 1000 (Zahlenmittel) Verwendung. Als primäre oder sekundäre Alkohole seien beispielhaft genannt: Methanol, Ethanol, n-Propanol, Isopropanol, n-Butanol, sekundär-Butanol, n-Pentanol, technische Pentanolmischungen, n-Hexanol, technische Hexanolgemische, 2-Ethylhexanol, Octanol, 2-Ethyloctanol, Decanol und Dodecanol sowie Cyclohexanol und Benzylalkohol. Als Alkoxypolyoxyalkylenalkohole haben sich beispielsweise Polyoxybutylen-, Polyoxypropylen-, Polyoxypropylen-polyoxyethylen- und vorzugsweise Polyoxyethylenalkohole bewährt, die als endständige Alkoxygruppe, beispielsweise eine Methoxy-, Ethoxy-, n- oder iso-Propoxy- oder n-Butoxygruppe gebunden haben können. Je nach Art der verwendeten Polyoxyalkylenreste können die (Poly)carbodiimide hydrophil, wasserlöslich, bis hydrophob, fettlöslich, eingestellt werden.

Zur Herstellung der erfindungsgemäßen Carbodiimide und/oder oligomeren Polycarbodiimide kann das 1,3-Bis-(1-methyl-1-isocyanato-ethyl)-benzol bei erhöhten Temperaturen, z.B. bei Temperaturen von 50 bis 200°C, vorzugsweise von 150 bis 185°C, zweckmäßigerweise in Gegenwart von Katalysatoren unter Kohlendioxidabspaltung kondensiert werden. Hierfür geeignete Verfahren werden beispielsweise beschrieben in der GB-A-1 083 410, der DE-B 1 130 594 (GB-A-851 936) und der DE-A-11 56 401 (US-A-3 502 722). Als Katalysatoren vorzüglich bewährt haben sich z.B. Phosphorverbindungen, die vorzugsweise ausgewählt werden aus der Gruppe der Phospholene, Phospholenoxide, Phospholidine und Phospholinoxide. Wenn die Reaktionsmischung den gewünschten Gehalt an NCO-Gruppen, entsprechend einem Kondensationsgrad n bis 10 besitzt, wird die Polycarbodiimidbildung üblicherweise beendet. Hierzu können die Katalysatoren unter vermindertem Druck abdestilliert oder durch Zusatz eines Desaktivators, wie z.B. Phosphortrichlorid, desaktiviert werden. Die Polycarbodiimidherstellung kann ferner in Abwesenheit oder Gegenwart von unter den Reaktionsbedingungen inerten Lösungsmitteln durchgeführt werden.

Durch geeignete Wahl der Reaktionsbedingungen wie z.B. der Reaktionstemperatur, der Katalysatorart und der Katalysatormenge sowie der Reaktionszeit kann der Fachmann in der üblichen Weise den Kondensationsgrad einstellen. Der Verlauf der Reaktion kann am einfachsten durch Bestimmung des NCO-Gehaltes verfolgt werden. Auch andere Parameter wie z.B. Viskositätsanstieg, Farbvertiefung oder CO₂-Entwicklung kann man für den Ablauf und die Steuerung der Reaktion heranziehen.

Nach beendeter Kondensation können, wie bereits ausgeführt wurde, die freien endständigen Isocyanatgruppen des Carbodiimids und/oder der oligomeren Polycarbodiimide mit C-H- oder N-H-reaktiven Wasserstoffverbindungen blockiert oder mit aliphatischen, cycloaliphatischen und/oder araliphatischen Aminen, derartigen Alkoholen und/oder Alkoxypolyoxyalkylenalkoholen vollständig oder teilweise abgesättigt werden. Nach einer vorteilhaften Ausführungsform werden zur vollständigen Absättigung der Isocyanatgruppen die aliphatischen, cycloaliphatischen oder araliphatischen Amine, Alkohole und/oder Alkoxypolyoxyalkylenalkohole vorzugsweise in einem geringen Überschuß von -OH-, -NH- und/oder -NH2-Gruppen zu NCO-Gruppen der (Poly)carbodiimide enthaltenden Reaktionsmischung hinzugefügt, dort ausreagieren gelassen und danach gegebenenfalls die nicht umgesetzte Menge, bevorzugt unter vermindertem Druck abdestilliert.

Nach einer anderen, vorzugsweise angewandten Verfahrensvariante können die erfindungsgemäßen (Poly)carbodiimide mit teilweise oder vollständig abgesättigten Isocyanatgruppen in der Weise hergestellt werden, daß man zunächst bis zu 50 Gew.-%, vorzugsweise bis zu 23 Gew.-% der Isocyanatgruppen des 1,3-Bis-(1-methyl-1-isocyanato-ethyl)-benzols mit mindestens einem aliphatischen, cycloaliphatischen oder araliphatischen Amin, Alkohol und/oder Alkoxypolyoxyalkylenalkohol umsetzt und danach die freien Isocyanatgruppen in Gegenwart von Katalysatoren unter Kohlendioxidabspaltung ganz oder teilweise zu Carbodiimiden und/oder oligomeren Polycarbodiimiden kondensiert.

Die erfindungsgemäßen Monocarbodiimide und/oder oligomeren Polycarbodiimide eignen sich hervorragend als Akzeptor für Carboxylverbindungen. Aufgrund der guten Löslichkeit, insbesondere der Monocarbodiimide, in den Aufbaukomponenten zur Herstellung von Polyurethanen und der guten Verträglichkeit, insbesondere der oligomeren Polycarbodiimide, mit den gebildeten Polyurethanen sowie der Reaktivität der NCO-Gruppen enthaltenden (Poly)carbodiimide mit Verbindungen mit reaktiven Wasserstoffatomen, eignen sich die erfindungsgemäßen (Poly)carbodiimide insbesondere als Stabilisatoren gegen den hydrolytischen Abbau von TPU.

Die Konzentration der erfindungsgemäßen Monocarbodiimide und/oder oligomeren Polycarbodiimide in den zu stabilisierenden Estergruppen enthaltenden Polykondensations- oder Polyadditionsprodukte beträgt im allgemeinen 0,05 bis 10 Gew.-%, vorzugsweise 0,1 bis 5 Gew.-%. In Einzelfällen kann, je nach der Beanspruchung des Kunststoffs durch Hydrolyse, die Konzentration auch höher sein.

Die erfindungsgemäß verwendbaren Monocarbodiimide und/oder oligomeren Polycarbodiimide können nach verschiedenen Methoden in die zu stabilisierende Estergruppen enthaltende TPU eingebracht werden. Beispielsweise können die erfindungsgemäßen (Poly)carbodiimide mit einer der Aufbaukomponenten zur Herstellung der TPU, z.B. den Polyisocyanaten oder/und Polyhydroxylverbindungen gemischt werden oder die (Poly)carbodiimide können der Reaktionsmischung zur Herstellung der TPU zudosiert werden. Nach einer anderen Verfahrensweise können die erfindungsgemäßen (Poly)carbodiimide der Schmelze der ausreagierten TPU einverleibt werden. Es ist jedoch auch möglich, TPU Granulate mit den erfindungsgemäßen (Poly)carbodiimiden zu beschichten und diese bei einer nachfolgenden Herstellung von Formkörpern durch Schmelzextrusion in die Kunststoffmassen einzubringen. Zur Herstellung von Polyurethan-Gießelastomeren und TPU auf Polyester-polyolbasis werden nach einer bevorzugten Ausführungsform zunächst die carboxylgruppenhaltigen Polyester-polyole zur Reduzierung der Säuregehalte mit den erfindungsgemäßen (Poly)carbodiimiden behandelt und danach diese, gegebenenfalls unter Zugabe von weiteren Mengen an (Poly)carbodiimiden, mit Polyisocyanaten, gegebenenfalls in Gegenwart zusätzlicher Hilfsmittel und Additive, zur Reaktion gebracht.

Als Komponente C) können die erfindungsgemäßen Formmassen 0 bis 50, vorzugsweise bis zu 40 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 mm, vorzugsweise 8 bis 50 mm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A) und B) sowie ggf. C) können die erfindungsgemäßen Formmassen noch übliche Zusatzstoffe und Verarbeitungshilfsmittel D) enthalten in Mengen bis zu 30, vorzugsweise bis zu 20 Gew.-%. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum aus, insbesondere bleiben die mechanischen Eigenschaften wie Zähigkeit und Reißdehnung bei Heißwasserlagerung und Feuchtwärmeeinfluß erhalten.

Demzufolge eignen sie sich zur Herstellung von Formkörpern jeglicher Art, wobei Anwendungen im Sanitärbereich (z.B. Armaturen) besonders bevorzugt sind.

### Beispiele

### Komponente A

Polyoximethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 10 g/10 min (190°C, 2,16 kg, nach DIN 53 735).

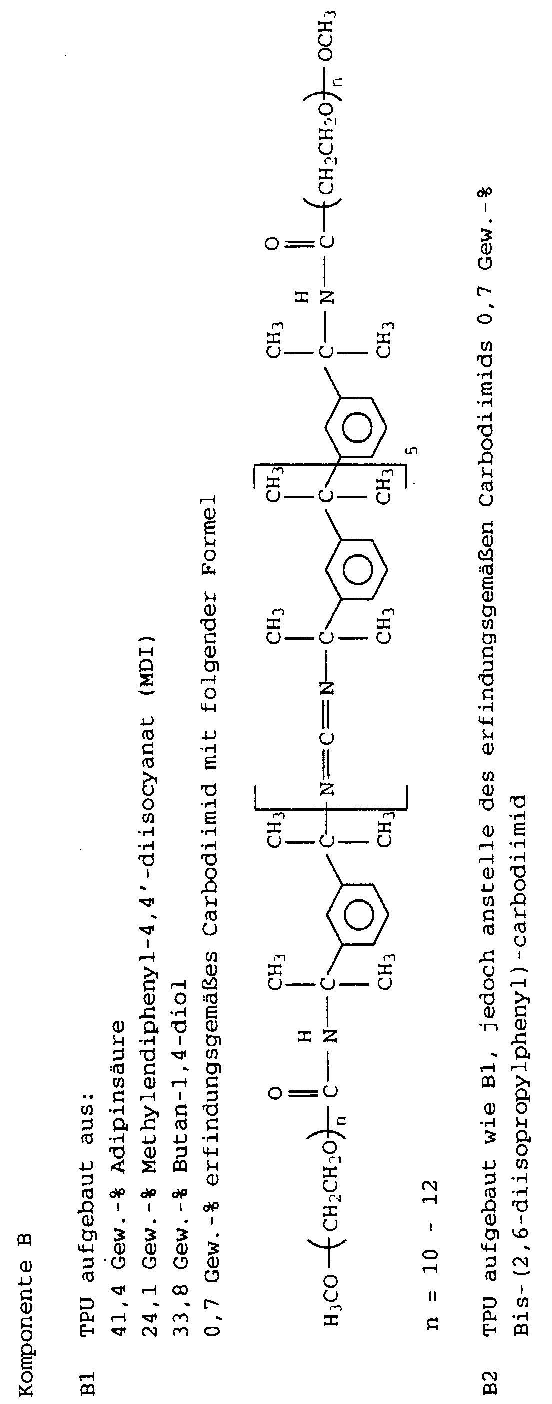

### Komponente D

D1 Glycerindistearat (Loxiol® VP 1206 der Firma Henkel)
D2 Synthetisches Mg-Silikat (Ambosol® der Firma Société Nobel, Bozel, Puteaux) mit folgenden Eigenschaften:

| | |
|---|---|
| Gehalt an MgO | > 14,8 Gew.-% |
| Gehalt an SiO₂ | > 59 Gew.-% |
| Verhältnis SiO₂ | MgO: 2,7 mol/mol |
| Schüttdichte | 20 bis 30 g/100 mol |
| Glühverlust | < 25 Gew.-% |

### Herstellung der Polyoximethylenformmassen

Granulate der Komponenten A und B wurden zunächst mit Komponente D in einem Taumler gemischt.

In einem Zweischneckenextruder (ZKS 30, Werner & Pfleiderer) wurden die Komponenten A und B bei Temperaturen von 190°C geschmolzen, innig vermischt,, als Strang ausgetragen, gekühlt und granuliert.

Es wurden 2 Produkte hergestellt mit folgender Zusammensetzung:

**Tabelle 1**

| Beispiel | Gewichtsprozent Komponente | | | |
|---|---|---|---|---|
| | A | B | D1 | D2 |
| 1 | 79,6 | 20 B1 | 0,3 | 0,1 |
| 2 (Vergleich) | 79,6 | 20 B2 | 0,3 | 0,1 |

Auf einer Spritzgußmaschine wurden bei einer Massetemperatur von 200°C und einer Formtemperatur von 80°C Schulterstäbe gespritzt gemäß ISO 9988, Teil 2.

An den Schulterstäben wurden bei 100°C Wärmelagerungen durchgeführt und die Farbabstände ΔE gegen eine Polyoximethylenstandard bestimmt nach der CIELAB-Formel nach DIN 6174 und DIN 5033 (Berechnung und Durchführung der Messung).

Weiterhin wurden die Zugfestigkeit und die Reißdehnung nach Wärmelagerung bei 100°C, gemessen nach ISO 527.

Die Daten zeigt Tabelle 2.

**Tabelle 2**

| Lagerdauer Wochen | ΔE | | Zugfestigkeit N/mm² | | Reißdehnung % | |
|---|---|---|---|---|---|---|
| | Bsp. 1 | Bsp. 2 | Bsp. 1 | Bsp. 2 | Bsp. 1 | Bsp. 2 |
| 0 | 3,3 | 3,5 | 49,1 | 48,2 | 51,1 | 56,3 |
| 1 | 6,0 | 6,0 | 51,8 | 51,0 | 47,7 | 51,2 |
| 2 | 7,5 | 8,4 | 52,3 | 51,1 | 41,1 | 50,4 |
| 3 | 6,8 | 7,5 | 52,2 | 51,1 | 35,7 | 35,4 |
| 4 | 7,7 | 9,5 | 52,0 | 51,4 | 43,3 | 44,1 |
| 5 | 8,2 | 10,8 | 52,1 | 51,4 | 46,4 | 47,0 |
| 6 | 10,0 | 11,5 | 51,8 | 51,1 | 44,6 | 42,1 |
| 7 | 10,4 | 11,5 | 51,5 | 52,2 | 37,3 | 40,0 |
| 8 | 11,4 | 13,1 | 52,5 | 51,5 | 34,2 | 36,4 |
| 9 | 10,7 | 13,8 | 51,6 | 52,3 | 41,0 | 43,9 |
| 10 | 12,4 | 15,1 | 52,5 | 51,9 | 39,8 | 37,2 |

Schulterstäbe aus den Produkten von Beispiel 1 und 2 wurden bei 100°C in Wasser gelagert und die Zugfestigkeit und die Reißdehnung nach ISO 527 gemessen. Die Werte sind in Tabelle 3 aufgeführt.

**Tabelle 3**

| Lagerdauer Wochen | Zugfestigkeit N/mm² | | Reißdehnung % | |
|---|---|---|---|---|
| | Bsp. 1 | Bsp. 2 | Bsp. 1 | Bsp. 2 |
| 0 | 49,1 | 48,2 | 51,1 | 56,3 |
| 1 | 46,1 | 45,1 | 55,7 | 56,8 |
| 2 | 45,8 | 43,6 | 46,1 | 48,3 |
| 3 | 40,3 | 39,5 | 58,1 | 52,6 |
| 4 | 39,6 | 38,7 | 39,1 | 39,1 |
| 5 | 38,5 | 36,8 | 23,9 | 19,2 |
| 6 | 32,8 | 27,5 | 9,7 | 6,7 |

Wie aus Tabelle 2 ersichtlich ist, zeigt Beispiel 1 eine geringere Zunahme des Farbabstands ΔE bei Wärmelagerung als Beispiel 2, d.h. die Verfärbungstendenz ist geringer. Die mechanischen Eigenschaften bei Wärmelagerung bleiben erhalten.

In den mechanischen Eigenschaften bei Heißwasserlagerung (siehe Tabelle 3) verhält sich das Produkt aus Beispiel 1 ebenfalls günstiger als das aus Beispiel 2.

## Patentansprüche

1. Schlagzähe thermoplastische Formmassen, enthaltend
A) 10 bis 99,5 Gew.-% eines Polyoxymethylenhomo- oder copolymerisates,
B) 0,5 bis 80 Gew.-% eines thermoplastischen Polyurethans,
C) 0 bis 50 Gew.-% eines faser- oder teilchenförmigen Füllstoffes oder deren Mischungen
D) 0 bis 30 Gew.-% üblicher Zusatzstoffe und Verarbeitungsmittel,
wobei die Gewichtsprozente der Komponenten A) bis D) 100 % ergeben, dadurch gekennzeichnet, daß das thermoplastische Polyurethan B) 0,05 bis 10 Gew.-%, bezogen auf B), eines Carbodiimids der Formel I enthält: 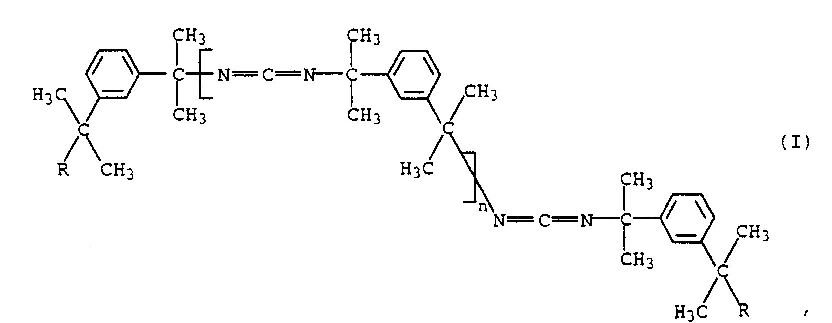 in der
R gleich oder verschieden und ausgewählt ist aus der Gruppe der -NCO-, -NHCONHR¹-, -NHCONR¹R²- und -NHCOOR³-Reste, wobei
R¹ und R² gleich oder verschieden sind und einen Alkyl-, Cycloalkyl- oder Aralkylrest bedeuten und
R³ gleich R¹ oder ein Alkoxypolyoxyalkylenrest ist und
n eine ganze Zahl von 0 bis 10 bedeutet.

2. Schlagzähe thermoplastische Formmassen nach Anspruch 1, dadurch gekennzeichnet, daß das thermoplastische Polyurethan B) 0,1 bis 5 Gew.-%, bezogen auf B), eines Carbodiimids der Formel I enthält.

3. Schlagzähe thermoplastische Formmassen nach den Ansprüchen 1 oder 2, dadurch gekennzeichnet, daß die Reste R eine -NHCOOR³ Gruppe und R³ einen Alkoxypolyoxyethylenrest mit einem Molekulargewicht von 76 bis 2000 bedeuten und n eine ganze Zahl von 0 bis 10 ist.

4. Schlagzähe thermoplastische Formmassen nach den Ansprüchen 1 bis 3, dadurch gekennzeichnet, daß die Komponente B) ein Carbodiimid der Formel II enthält: 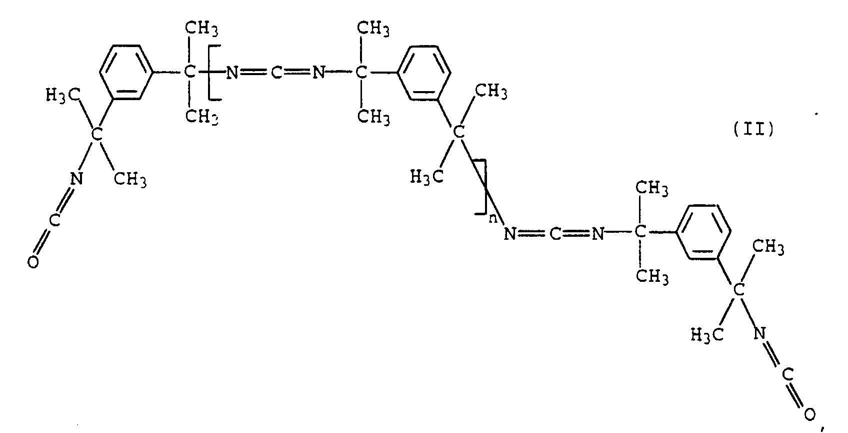 in der n eine ganze Zahl von 0 bis 10 bedeutet.

5. Schlagzähe thermoplastische Formmassen nach den Ansprüchen 1 bis 3, dadurch gekennzeichnet, daß das Carbodiimid der Formel I erhältlich ist
a) durch Kondensation unter Kohlendioxidabspaltung von 1,3-Bis-(1-methyl-1-isocyanato-ethyl)-benzol und gegebenenfalls teilweise oder vollständige Umsetzung der endständigen Isocyanatgruppen des erhaltenen Carbodiimids oder/und der erhaltenen oligomeren Polycarbodiimide mit mindestens einem aliphatischen, cycloaliphatischen oder araliphatischen Amin, Alkohol und/oder Alkoxypolyoxyalkylenalkohol oder
b) durch Umsetzung von bis zu 50 % der Isocyanatgruppen des 1,3-Bis-(1-methyl-1-isocyanato-ethyl)-benzols mit mindestens einem aliphatischen, cycloaliphatischen oder araliphatischen Amin, Alkohol und/oder Alkoxypolyoxyalkylenalkohol und anschließende Kondensation der freien Isocyanatgruppen unter Kohlendioxidabspaltung.

6. Schlagzähe thermoplastische Formmassen nach Anspruch 4, dadurch gekennzeichnet, daß das Carbodiimid der Formel II erhältlich ist durch Kondensation und Kohlendioxidabspaltung von 1,3-Bis-(1-methyl-1-isocyanato-ethyl)-benzol.

7. Verwendung der schlagzähen thermoplastischen Formmassen gemäß den Ansprüchen 1 bis 6 zur Herstellung von Fasern, Folien und Formkörpern.

8. Formkörper, erhältlich aus den schlagzähen thermoplastischen Formmassen gemäß den Ansprüchen 1 bis 6.

## Claims

1. An impact-resistant thermoplastic molding material containing
A) from 10 to 99.5% by weight of a polyoxymethylene homo- or copolymer,
B) from 0.5 to 80% by weight of a thermoplastic polyurethane,
C) from 0 to 50% by weight of a fibrous or particulate filler or a mixture thereof and
D) from 0 to 30% by weight of conventional additives and processing assistants,
the percentages by weight of the components A) to D) summing to 100%, wherein the thermoplastic polyurethane B) contains from 0.05 to 10% by weight, based on B), of a carbodiimide of the formula I: 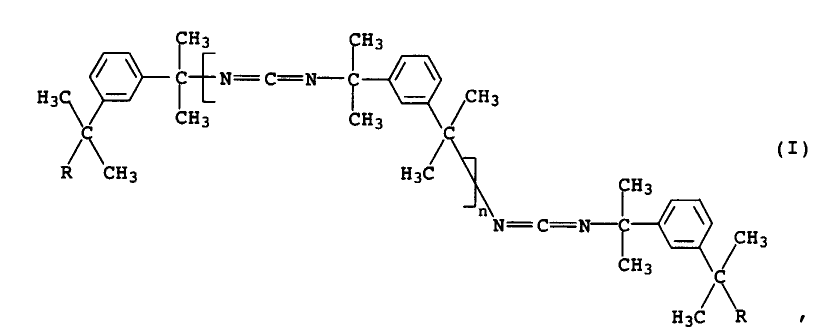 where
R is identical or different and is selected from the group consisting of -NCO-, -NHCONHR¹-, -NHCONR¹R²- and -NHCOOR³- radicals, where
R¹ and R² are identical or different and are an alkyl, cycloalkyl or aralkyl radical and
R³ is R¹ or an alkoxypolyoxyalkylene radical and
n is an integer from 0 to 10.

2. An impact-resistant thermoplastic molding material as claimed in claim 1, wherein the thermoplastic polyurethane B) contains from 0.1 to 5% by weight, based on B), of a carbodiimide of the formula I.

3. An impact-resistant thermoplastic molding material as claimed in claim 1 or 2, wherein R is a -NHCOOR³ group and R³ is an alkoxypolyoxyethylene radical having a molecular weight of from 76 to 2000 and n is an integer from 0 to 10.

4. An impact-resistant thermoplastic molding material as claimed in any of claims 1 to 3, wherein component B) contains a carbodiimide of the formula II: 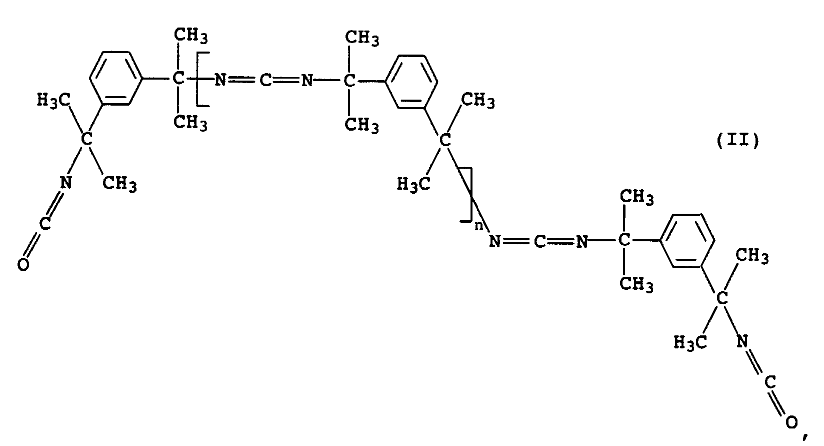 where n is an integer from 0 to 10.

5. An impact-resistant thermoplastic molding material as claimed in any of claims 1 to 3, wherein the carbodiimide of the formula I is obtainable
a) by condensation, with elimination of carbon dioxide, of 1,3-bis(1-methyl-1-isocyanatoethyl)benzene and, if required, reaction of some or all of the terminal isocyanate groups of the resulting carbodiimide and/or of the resulting oligomeric polycarbodiimides with at least one aliphatic, cycloaliphatic or araliphatic amine, alcohol and/or alkoxypolyoxyalkylene alcohol or
b) by reaction of up to 50% of the isocyanate groups of the 1,3-bis(1-methyl-1-isocyanatoethyl)benzene with at least one aliphatic, cycloaliphatic or araliphatic amine, alcohol and/or alkoxypolyoxyalkylene alcohol and subsequent condensation of the free isocyanate groups with elimination of carbon dioxide.

6. An impact-resistant thermoplastic molding material as claimed in claim 4, wherein the carbodiimide of the formula II is obtainable by condensation, with elimination of carbon dioxide, of 1,3-bis(1-methyl-1-isocyanatoethyl)benzene.

7. Use of an impact-resistant thermoplastic molding material as claimed in any of claims 1 to 6 for the production of fibers, films and moldings.

8. A molding obtainable from an impact-resistant thermoplastic molding material as claimed in any of claims 1 to 6.

## Revendications

1. Masses à mouler thermoplastiques résilientes, qui contiennent
A) 10 à 99,5% en poids d'un homopolymère ou d'un copolymère de polyoxyméthyléne,
B) 0,5 à 80% en poids d'un polyuréthanne thermoplastique,
C) 0 à 50% en poids d'une charge fibreuse ou particulaire ou de mélanges de charges de ce genre,
D) 0 à 30% en poids de charges usuelles et d'agents d'ouvrabilité habituels,
où les pourcentages pondéraux des composants A) à D) totalisent 100%, caractérisées en ce que le polyuréthanne thermoplastique B) contient de 0,05 à 10% en poids, par rapport à B), d'un carbodiimide de la formule I 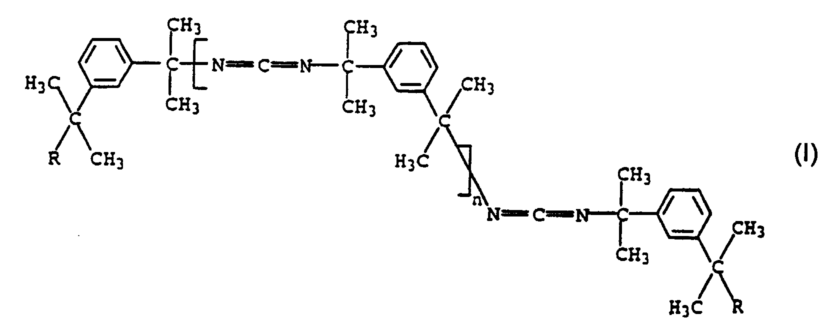 dans laquelle les symboles
R sont identiques ou différents et sont choisis dans le groupe formé par les radicaux -NCO-, -NHCONHR¹-, -NHCONR¹R²- et -NHCOOOR³-,
où
R¹ et R² sont identiques ou différents et représentent un radical alkyle, cycloalkyle ou aralkyle et
R³ est identique à R¹ ou représente un radical alcoxypolyoxyalkylène et
n représente un nombre entier dont la valeur varie de 0 à 10.

2. Masses à mouler thermoplastiques résilientes suivant la revendication 1, caractérisées en ce que le polyuréthanne thermoplastique B) contient de 0,1 à 5% en poids, par rapport à B), d'un carbodiimide de la formule I.

3. Masses à mouler thermoplastiques résilientes suivant les revendications 1 ou 2, caractérisées en ce que les symboles R représentent un groupe -NHCOOR³ et R³ représente un groupe alcoxypolyoxyéthylène, d'un poids moléculaire de 76 à 2000 et n représente un nombre entier dont la valeur varie de 0 à 10.

4. Masses à mouler thermoplastiques résilientes suivant les revendications 1 à 3, caractérisées en ce que le composant B) contient un carbodiimide de la formule II : 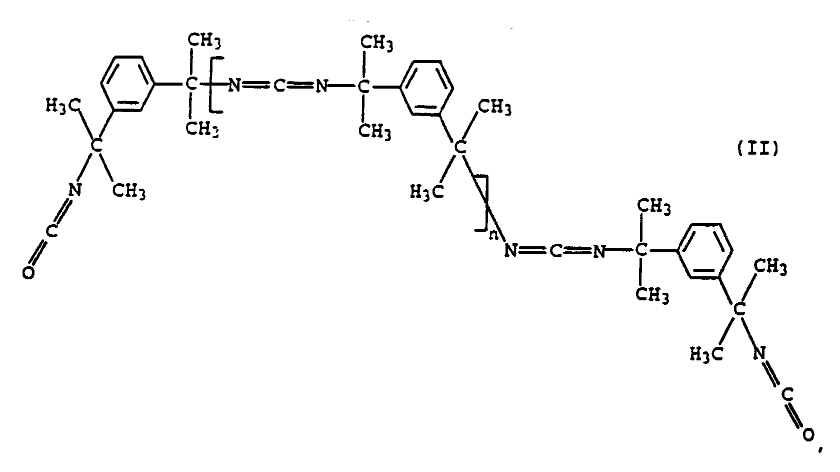 dans laquelle n représente un nombre entier dont la valeur varie de 0 à 10.

5. Masses à mouler thermoplastiques résilientes suivant les revendications 1 à 3, caractérisées en ce que l'on peut obtenir le carbodiimide de la formule I
a) par condensation avec séparation de dioxyde de carbone du 1,3-bis-(1-méthyl-1-isocyanatoéthyl)benzène et éventuellement réaction, partielle ou totale, des radicaux isocyanate terminaux du carbodiimide obtenu et/ou des polycarbodiimides oligomériques obtenus avec au moins un alcool alcoxypolyoxyalkylénique, un alcool et/ou une amine, aliphatique, cycloaliphatique ou araliphatique, ou
b) par réaction de jusqu'à 50% des radicaux isocyanate du 1,3-bis-(1-méthyl-1-isocyanatoéthyl)benzène avec au moins un alcool alcoxypolyoxyalkylénique, un alcool et/ou une amine, aliphatique, cycloaliphatique ou araliphatique et condensation subséquente des radicaux isocyanate libres avec séparation de dioxyde de carbone.

6. Masses à mouler thermoplastiques résilientes suivant la revendication 4, caractérisées en ce que le carbodiimide de la formule II peut s'obtenir par la condensation et la séparation de dioxyde de carbone du 1,3-bis-(1-méthyl-1-isocyanatoéthyl)benzène.

7. Utilisation des masses à mouler thermoplastiques résilientes suivant l'une quelconque des revendications 1 à 6, pour la fabrication de fibres, de feuilles et d'articles moulés.

8. Articles moulés que l'on peut obtenir à partir des masses à mouler thermoplastiques résilientes suivant l'une quelconque des revendications 1 à 6.
